# EUROPÄISCHE PATENTSCHRIFT

(11) **EP 3 574 163 B1**
(45) Veröffentlichungstag und Bekanntmachung des Hinweises auf die Patenterteilung: **05.06.2024**
(21) Anmeldenummer: 18702654.7
(22) Anmeldetag: 29.01.2018
(51) Int. Cl.: E04C 3/06, E04H 3/24, F16B 7/18, F16B 21/02, E04C 3/04

(54) **SET UND RAHMENKONSTRUKTION ZUR BILDUNG EINES PODESTS, EINER BÜHNE UND/ODER EINER TRIBÜNE**
SET AND FRAME STRUCTURE FOR FORMING A PLATFORM, A STAGE AND/OR A GRANDSTAND
SET ET STRUCTURE DE CADRE POUR UNE ESTRADE, UNE SCÈNE ET/OU UNE TRIBUNE

(30) Priorität: 30.01.2017 DE 102017101718
(43) Veröffentlichungstag der Anmeldung: 04.12.2019
(73) Patentinhaber: Hoac Schweisstechnik GmbH, 47441 Moers (DE)
(72) Erfinder: HOEGG, Martin, 45138 Essen (DE)
(74) Vertreter: Cohausz & Florack
(86) Internationale Anmeldenummer: PCT/EP2018/052129
(87) Internationale Veröffentlichungsnummer: WO 2018/138336

(56) Entgegenhaltungen:
- DE-A1-102009 020 620
- DE-U1-202009 009 553
- DE-U1-202011 107 738
- US-A- 3 362 056
- US-A1- 2015 023 759

## Beschreibung

Die Erfindung betrifft ein Set aus Konstruktionsprofil und Montageelement zur Bildung einer Rahmenkonstruktion, insbesondere eines Podests, einer Bühne und/oder einer Tribüne, mit zwei Profilelementen und einem die Profilelemente verbindenden Verbindungsabschnitt, wobei die Profilelemente an einander gegenüberliegenden Seiten des Verbindungsabschnitts angeordnet sind, wobei der Verbindungsabschnitt einen Nutgrund und die Profilelemente einander gegenüberliegende Nutflanken wenigstens einer sich längs des Konstruktionsprofils erstreckenden Montagenut bilden und wobei die Öffnung der Montagenut zwischen den Profilelementen angeordnet ist. Ferner betrifft die Erfindung eine Rahmenkonstruktion, insbesondere eines Podests, einer Bühne und/oder einer Tribüne, mit einer Mehrzahl, vorzugsweise vier, insbesondere in Form eines Rechtecks, umlaufend angeordneter gleichartiger, vorzugsweise an den Längsenden miteinander verschweißter, Konstruktionsprofile.

Zur Bereitstellung verschiedener Konstruktionen, wie Rahmen-, Podest-, Bühnen- oder Tribünenkonstruktionen, werden Konstruktionsprofile verwendet und in der gewünschten Weise miteinander verbunden. Bei den Konstruktionsprofilen handelt es sich insbesondere um längliche Profile, die gleichartig aufgebaut sein oder sich wenigstens ähneln können, was einen modularen Aufbau der Rahmenkonstruktionen erlaubt. Gleichartig bedeutet dabei, dass sich die Querschnitte der Konstruktionsprofile wenigstens ähneln oder im Wesentlichen einander entsprechen können, so dass einzelne Konstruktionsprofile unter wenigstens im Wesentlichen Beibehaltung der eigentlichen Rahmenkonstruktion gegeneinander ausgetauscht werden können. Besonders bevorzugt ist es dabei, wenn die Querschnitte der Konstruktionsprofile identisch zueinander sind. Die Gleichartigkeit der Konstruktionsprofile kann sich alternativ oder zusätzlich auf die Anordnung von Öffnungen und dergleichen zum Verbinden der Konstruktionsprofile untereinander beziehen. Ganz grundsätzlich weisen die Konstruktionsprofile meist einen im Wesentlichen konstanten Querschnitt auf, so dass einfach unterschiedliche Konstruktionen geschaffen werden können. Die Konstruktionsprofile können beispielsweise zu rechteckigen Rahmenkonstruktionen zusammengefügt werden, aus denen dann wiederum, bedarfsweise zusammen mit weiteren Elementen Bühnen, Tribünen oder Podeste gebildet werden können. So werden die Bühnen, Tribünen oder Podeste unter Verwendung gleichartiger Rahmenkonstruktionen und die Rahmenkonstruktion durch Verwendung gleichartiger Konstruktionsprofile aufgebaut.

Konstruktionsprofile der genannten Art sind beispielsweise in der DE 94 077 18 U1 beschrieben. Die Konstruktionsprofile weisen zwei kastenförmige Profilelemente in Form von Hohlprofilen auf, die durch einen Verbindungsabschnitt in Form eines Stegs miteinander verbunden sind. Der Verbindungsabschnitt ist gegenüber den Seiten der kastenförmigen Profilelemente nach innen versetzt und dort etwa mittig angeordnet. Daher bilden die Profilelemente zusammen mit dem Verbindungsabschnitt zwei zu einander gegenüberliegenden Seiten offene Montagenuten zum Verbinden benachbarter gleichartiger Konstruktionsprofile mit einem in die angrenzenden Montagenuten der benachbarten Konstruktionsprofile eingreifenden Kulissenstein. Der Nutgrund der Montagenuten wird jeweils durch den Verbindungsabschnitt gebildet, während die Flanken der Montagenuten jeweils durch die gegenüberliegenden Profilelemente gebildet werden. Die Montagenuten sind dabei so ausgebildet, dass zwei aneinandergrenzende Montagenuten zweier Konstruktionsprofile einen gemeinsamen Querschnitt bilden, der im Wesentlichen dem Querschnitt des zur Verbindung der angrenzenden Konstruktionsprofile dienenden Kulissensteins entspricht. Um die Kulissensteine mit den Konstruktionsprofilen verschrauben zu können, weisen die Konstruktionsprofile in regelmäßigen Abständen Öffnungen in den Verbindungsabschnitten auf. Durch die entsprechende Verschraubung kann letztlich eine kraftschlüssige und formschlüssige Verbindung zwischen den benachbarten Konstruktionsprofilen geschaffen werden. Diese Verbindung erlaubt es, verschiedene Rahmenkonstruktionen miteinander zu verbinden und mit Hilfe weiterer Bauteile eine Bühne, eine Tribüne oder ein Podest zu bilden.

Die beschriebenen Konstruktionsprofile und Rahmenkonstruktionen bieten letztlich ein hohes Maß an Flexibilität bei der Bildung von Bühnen, Tribünen oder Podesten, wobei die Montage zudem in hohem Maße vereinfacht wird. Eine weitere Vereinfachung wird durch eine einseitige Verschraubung der Kulissensteine und Fixierung der Verbindungsmittel an den Konstruktionsprofilen gemäß der DE 10 2013 103 947 A1 erreicht. Es sind so weniger lose Teile zu handhaben, die folglich auch nicht verloren gehen können. Dennoch besteht das Bestreben, die Flexibilität und die Handhabbarkeit bei der Bildung von Bühnen, Tribünen und/oder Podesten weiter zu verbessern. Ein Konstruktionsprofil, von dem die Erfindung ausgeht, ist aus der DE 20 2011 107738 U1 bekannt.

Die US 2015/023759 zeigt ein Set aus Konstruktionsprofil und Montageelement gemäß dem Oberbegriff des Anspruchs 1.

Daher liegt der vorliegenden Erfindung die Aufgabe zugrunde, das Konstruktionsprofil und die Rahmenkonstruktion jeweils der vorgenannten Art derart auszugestalten und weiterzubilden, dass die Bildung von Bühnen, Tribünen und/oder Podesten weiter vereinfacht werden kann.

Diese Aufgabe wird durch ein Set nach Anspruch 1 gelöst.

Zudem wird die genannte Aufgabe durch eine Rahmenkonstruktion nach Anspruch 13 gelöst.

Durch die Ausbildung der Montagenut mit wenigstens einer Hinterschneidung, die sich ebenso wie die Montagenut selbst entlang der Längserstreckung des Konstruktionsprofils erstreckt, kann die Montagenut nicht nur der Verbindung zweier aneinandergrenzender und parallel zueinander ausgerichteter Konstruktionsprofile dienen, sondern auch die Anbringung eines Montageelements erlauben, indem das Montageelement die Hinterschneidung hintergreift. Da die Montagenut eine Hinterschneidung gesehen von der Öffnung der Montagenut bildet, kann das die Hinterschneidung der Montagenut hintergreifende Montageelement nicht ohne Weiteres aus der Öffnung der Montagenut herausgezogen werden. Da sich die Hinterschneidung aber zugleich in Längserstreckung des Konstruktionsprofils erstreckt, kann das einmal in die Montagenut eingesetzte Montageelement längs zur Montagenut verschoben und an der jeweils gewünschten Stelle festgelegt werden. Dabei kann das Montageelement vorzugsweise so geformt sein, dass es durch die Öffnung der Montagenut in die Montagenut eingesetzt werden kann. Alternativ oder zusätzlich kann das Montageelement an den Längsenden der Montagenut längs zur Montagenut in die Montagenut eingeschoben werden.

Die Ausbildung der Rahmenkonstruktion durch gleichartige Konstruktionsprofile der genannten Art ermöglicht es, dass rund um die Rahmenkonstruktion, bedarfsweise auch nachträglich, ein Montageelement festgelegt werden kann. Dabei kann das Montageelement grundsätzlich dem Abringen unterschiedlicher Bauteile wie Geländer, Konsolen, Verblendungen, Lichtleisten und Monatgeschienen, am entsprechenden Konstruktionsprofil dienen. Entweder ist das entsprechende Bauteil bereits fest mit dem zu montierenden Montageelement verbunden oder das Bauteil kann nach dem Festlegen des Montageelements in der Montagenut an dem Montageelement festgelegt werden. In diesem Zusammenhang bietet es sich weiter an, wenn das Montageelement ein standardisiertes Verbindungselement aufweist, mit dem unterschiedliche Bauteile auf dieselbe Art beispielweise verschraubt oder verrastet werden können, etwa um eine kraftschlüssige und/oder formschlüssige Verbindung zwischen dem Montageelement und dem über das Montageelement am Konstruktionsprofil zu montierende Bauteil auszubilden.

Der besseren Verständlichkeit halber und zur Vermeidung unnötiger Wiederholungen werden nachfolgend das Konstruktionsprofil und die Rahmenkonstruktion mit wenigstens zwei solcher Konstruktionsprofile gemeinsam beschrieben, ohne jeweils im Einzelnen zwischen dem Konstruktionsprofil und der Rahmenkonstruktion zu unterscheiden. Für den Fachmann ergibt sich jedoch anhand des Kontextes, welche Merkmale jeweils hinsichtlich des Konstruktionsprofils und der Rahmenkonstruktion bevorzugt sind.

Bei einer ersten besonders bevorzugten Ausgestaltung des Konstruktionsprofils bildet der Verbindungsabschnitt den Nutgrund zweier unterschiedlicher, sich jeweils längs des Konstruktionsprofils erstreckender Montagenuten. Alternativ oder zusätzlich ist es bevorzugt, wenn die Profilelemente einander gegenüberliegende Nutflanken von zwei unterschiedlichen sich längs des Konstruktionsprofils erstreckenden Montagenuten bilden. So können zwei unterschiedliche Montagenuten gebildet werden, um das Konstruktionsprofil an mehreren Orten, insbesondere an mehreren Seiten mit weiteren Konstruktionsprofilen und/oder Montageelementen zu verbinden. Dabei ist es hinsichtlich der Flexibilität der Handhabung der Konstruktionsprofile bevorzugt, wenn die Öffnungen der Montagenuten zwischen den Profilelementen angeordnet sind und zudem, vorzugsweise, zu gegenüberliegenden Seiten des Konstruktionsprofils weisen. Dann muss nicht immer die richtige Ausrichtung des Konstruktionsprofils eingehalten werden. Beispielsweise kann es entbehrlich sein, ein langes und damit sperriges Konstruktionsprofil vor der Montage umzudrehen, um an der gewünschten Stelle ein Montagelement anbringen zu können. Um die Flexibilität der Handhabung der Konstruktionsprofile weiter zu verbessern, können die beiden Montagenuten wenigstens im Wesentlichen gleichförmig, vorzugsweise wenigstens im Wesentlichen symmetrisch zueinander ausgebildet sein. So können die beiden Montagenuten wechselseitig in gleicher Weise zu Montagezwecken genutzt werden. Hinsichtlich der Symmetrie ist es dabei besonders bevorzugt, wenn diese in Bezug zu einer sich in Längsrichtung des Konstruktionsprofils erstreckenden und durch den Verbindungsabschnitt definierten Symmetrieebene gegeben ist. Bevorzugt ist die Symmetrieebene dabei parallel zum Verbindungsabschnitt ausgerichtet. So kann es für Montagezwecke beispielsweise unerheblich sein, ob das Profil auf dem Kopf steht oder nicht. Es kann zudem so sein, dass infolge der Symmetrie überhaupt nicht mehr festgestellt werden kann, ob das Konstruktionsprofil auf dem Kopf steht oder nicht, da es dann auf die entsprechende Ausrichtung des Konstruktionsprofils nicht mehr ankommt.

Jede der Montagenuten kann gesehen von der jeweiligen Öffnung der Montagenut den Profilelementen zugeordnet jeweils wenigstens eine sich längs des Konstruktionsprofils erstreckende Hinterschneidung zum Eingreifen eines Halteabschnitts eines in die Montagenut eingesetzten Montageelements aufweisen. Mithin kann in jede der beiden Montagenuten ein Montageelement eingesetzt und zur Anbindung eines weiteren Bauteils an das Konstruktionsprofil genutzt werden. Damit das Montageelement einfach und zuverlässig in die Montagenut eingesetzt werden kann, weist wenigstens eine Montagenut an beiden gegenüberliegenden Flanken der Montagenut jeweils eine Hinterschneidung zum Hintergreifen durch wenigstens ein Montageelement auf.

Die wenigstens eine Hinterschneidung der wenigstens einen Montagenut wird von wenigstens einer Haltenut gebildet. Dies kann die Montage des Montageelements vereinfachen, das zum Hintergreifen der Hinterschneidung teilweise in die Haltenut eingeführt werden kann. Damit das Montageelement besonders einfach und zuverlässig in die wenigstens eine Haltenut eingeführt werden kann, kann sich die Haltenut seitlich an den Nutgrund der Montagenut anschließen. Unabhängig von der Haltenut weist die Hinterschneidung eine von der Öffnung der Montagenut weg geneigte Haltefläche zum Halten des Montageelements auf. Dies dient beispielsweise dem Zentrieren des Montageelements in der Montagenut und/oder der einfacheren Herstellung des Konstruktionsprofils.

Die Handhabung des Konstruktionsprofils kann auch dadurch vereinfacht werden, dass die wenigstens eine Montagenut wenigstens im Wesentlichen symmetrisch zu einer sich in Längsrichtung des Konstruktionsprofils und durch die Öffnung der wenigstens einen Montagenut erstreckenden, insbesondere den Verbindungsabschnitt schneidenden, Ebene ausgebildet ist. Dadurch kann nämlich erreicht werden, dass das Montageelement, sofern das Montageelement in geeigneter Weise ausgebildet ist, in zwei unterschiedlichen Ausrichtungen in der Montagenut festgelegt werden kann. Die beiden Ausrichtungen können sich dann beispielsweise dadurch unterscheiden, dass das Montageelement um 180° gedreht ist. Anders ausgedrückt kann das Montageelement beispielsweise aufrecht oder kopfüber in der Montagenut festgelegt werden.

Um das Montageelement in einer Richtung längs zum Konstruktionsprofil festlegen zu können, weist die wenigstens eine Montagenut zwei einander gegenüberliegende Montageflächen zur kraftschlüssigen Anlage eines wenigstens teilweise in der Montagenut aufgenommenen Montageelements auf. Der Kraftschluss wirkt dabei vorzugsweise in Längsrichtung des Konstruktionsprofils. In wenigstens einer Richtung senkrecht dazu, vorzugsweise in allen Richtungen senkrecht dazu, kann das Montageelement der Einfachheit und Zuverlässigkeit halber formschlüssig in der Montagenut gehalten sein. Besonders funktional und platzsparend ist es, wenn wenigstens eine Montageflächen zwischen der zugehörigen Hinterschneidung und der Öffnung der Montagenut vorgesehen ist. Die entsprechende Montagefläche kann so zur Bildung der zugehörigen Hinterschneidung genutzt werden. Alternativ oder zusätzlich ist es für die einfache und zuverlässige Verbindung zwischen dem Konstruktionsprofil und dem Montageelement zweckmäßig, wenn die zwei Montageflächen einander gegenüberliegend angeordnet, insbesondere wenigstens im Wesentlichen parallel zueinander ausgerichtet, sind. So kann jede Montagefläche an einem Profilelement des Konstruktionsprofils bzw. an einer Nutflanke der Montagenut vorgesehen sein.

Zur Aussteifung des Konstruktionsprofils ist wenigstens ein Profilelement mit wenigstens einem Hohlprofilelement mit einem wenigstens im Wesentlichen geschlossenen Querschnitt umfasst. Dabei wird die Ausgestaltung des Konstruktionsprofils vereinfacht und der Verbindungabschnitt stabilisiert, wenn ein Hohlprofilelement wenigstens eines Profilelements angrenzend zum Verbindungsabschnitt vorgesehen ist. Das wenigstens eine Hohlprofilelement kann dabei in einfacher Weise eine Nutflanke wenigstens einer Montagenut bereitstellen.

Alternativ oder zusätzlich kann das Konstruktionsprofil zur einfacheren und kostengünstigeren Fertigung als Strangpressprofil ausgebildet sein. Der Werkstoff des Konstruktionsprofils ist dann vorzugsweise ein metallischer Werkstoff, insbesondere Aluminium.

Zur schnellen und bedarfsweise nachträglichen Verbindung des Konstruktionsprofils mit einem weiteren Bauteil ist in der wenigstens einen Montagenut wenigstens ein Montageelement wenigstens teilweise aufgenommen. Dabei hintergreift das Montageelement zu seiner Verankerung in der Montagenut die wenigstens eine Hinterschneidung der entsprechenden Montagenut. Zudem ist es weiter erfindungsgemäß , dass das Montageelement kraftschlüssig an den Montageflächen der entsprechenden Montagenut anliegt und so bedarfsweise in Längsrichtung des Konstruktionsprofils festgelegt ist.

Um eine zuverlässige Arretierung des Montageelements in der Montagenut zu erreichen, weist das Montageelement zwei wenigstens im Wesentlichen ebene Montageflächen zur kraftschlüssigen Anlage an den Montageflächen der Montagenut auf. So können hohe Kräfte vom Montageelement auf das Konstruktionsprofil, und zwar in dessen Längserstreckung, übertragen werden. Weiter bevorzugt ist es dabei, wenn das Montageelement im Uhrzeigersinn oder im Gegenuhrzeigersinn angrenzend zu den Montageflächen Abrundungen aufweist. Diese Abrundungen können so ausgebildet sein, dass das Montageelement in einer Ausrichtung in die Montagenut eingesetzt und durch Drehen des Montageelements in der Montagenut festgelegt werden kann. Die Drehachse verläuft dabei vorzugsweise durch den Nutgrund und die Öffnung der Montagenut. Besonders bevorzugt kann die Drehachse senkrecht zu einer durch den Verbindungsabschnitt definierten Ebene ausgerichtet sein. Ohne die Abrundungen wäre dann beispielsweise kein Einsetzen oder Eindrehen des Montageelements in die Montagenut möglich, weil das Montageelement an die

Flanken der Montagenut stoßen und so ein weiteres Verdrehen des Montageelements blockieren würde. Dementsprechend wird ein Überdrehen des Montageelements in der Montagenut durch die längliche Ausgestaltung der Montageflächen des Montageelements verhindert, die in der Eindrehrichtung des Montageelements in die Montagenut in der Montagestellung einen Formschluss mit der Montagenut, insbesondere den Montageflächen der Montagenut bilden.

Um eine zuverlässige kraftschlüssige Verbindung zwischen dem Montageelement und der Montagenut zu erreichen, kann das Montageelement angrenzend zu wenigstens einer Montagefläche wenigstens eine Aussparung aufweisen. Dadurch kann eine gewisse Elastizität des Montageelements im Bereich der wenigstens einen Montagefläche erreicht werden. Diese Elastizität kann dann dafür sorgen, dass die Montageflächen des Montageelements fest gegen die Montageflächen der Montagenut gepresst werden. Dies gilt insbesondere für den Fall, dass das Montageelement ohne die wenigstens eine Aussparung nur eine geringe Elastizität aufweisen würde. Um einen möglichst großflächigen Kraftschluss zwischen dem Montageelement und der Montagenut bereitzustellen, bietet sich eine schlitzförmige, insbesondere parallel zur Montagefläche verlaufende, Aussparung an. Im verbundenen Zustand kann der wenigstens eine Montageabschnitt zwischen der wenigstens einen Montagefläche und der wenigstens einen Aussparung unter Ausbildung einer Rückstellkraft gegen die Montagefläche der Montagenut elastisch verformt werden, so dass das Montageelement sicher in der Montagenut gehalten ist.

Alternativ oder zusätzlich kann das Montageelement seitlich abstehende und die Hinterschneidungen hintergreifende Halteabschnitte aufweisen. Dies vereinfacht nicht nur das Einsetzen und/oder Eindrehen des Montageelements in die Montagenut, sondern auch das Ausbilden einer formschlüssigen Verbindung, die dem Ausziehen des Montageelements aus der Öffnung der Montagenut entgegenwirkt. Die Halteabschnitte sind dabei bevorzugt dazu ausgebildet, um in die Haltenuten der Konstruktionsprofile einzugreifen. Alternativ oder zusätzlich kann das Montageelement einen von der dem Verbindungsabschnitt abgewandten Seite zugänglichen Innensechskant zum Eindrehen des Montageelements in die Montagenut aufweisen. Es können zu diesem Zweck alternativ oder zusätzlich auch andere Verbindungselemente vorgesehen sein. Das vereinfacht das Montieren des Montageelements, und zwar insbesondere dann, wenn hohe Kräfte zum Eindrehen des Montageelements in die Montagenut aufgebracht werden müssen.

Um das Montageelement und damit das Konstruktionsprofil mit unterschiedlichen Bauteilen verschrauben zu können, kann das Montageelement ein Innengewinde zum Einschrauben eines Außengewindes von der Seite des Konstruktionselements aufweisen. Dabei kann das Innengewinde von einer, insbesondere metallischen, Hülse bereitgestellt werden, die in einem Montageelement aus einem ansonsten abweichenden Material aufgenommen ist, etwa um eine zweckmäßige kraftschlüssige Verbindung mit dem Konstruktionsprofil bereitstellen zu können. Hierzu kann das Material elastischer und/oder mit einem höheren Reibbeiwert als das Metall der Hülse ausgebildet sein. Besonders bevorzugt ist das Montageelement in diesem Zusammenhang, bedarfsweise bis auf die Hülse, aus wenigstens einem, bedarfsweise faserverstärkten, Kunststoff gebildet. Anstelle eines Innengewindes kann das Montageelement aber alternativ oder zusätzlich auch ein anderes Verbindungselement aufweisen.

Als Kunststoffe kommen insbesondere thermoplastische Kunststoffe in Frage, die einfach spritzgegossen oder extrudiert werden können. Besonders bevorzugte Materialeigenschaften werden dabei durch Polyethylen (PE), Low Density Polyethylen (LDPE) und/oder Polyamid (PA) erhalten. Bedarfsweise kann der Kunststoff zur Verbesserung der mechanischen Eigenschaften faserverstärkt sein, wozu sich insbesondere Glasfasern oder dergleichen eignen. Der Faseranteil kann zudem beispielsweise zwischen 20 Gew.-% und 40 Gew.-%, insbesondere etwa 30 Gew.-%, betragen.

Dem Verbindungsabschnitt zugewandt kann das Montageelement einen gegenüber der entsprechenden Seite des Montageelements vorstehenden Stiftabschnitt aufweisen. Der Stiftabschnitt kann sich beispielsweis gegen den Verbindungsabschnitt abstützen und zur Bildung einer kraftschlüssigen Verbindung zwischen dem Montageelement und dem Konstruktionsprofil beitragen, die einem Verschieben des Montageelements in Längsrichtung der Montagenut entgegenwirkt. Bedarfsweise kann der Stiftabschnitt aber auch in eine Aussparung, insbesondere Öffnung, im Verbindungsabschnitt eingreifen, um so einen Formschluss zwischen dem Montageelement und dem Konstruktionsprofil bereitzustellen, das einem Verschieben des Montageelements in Längsrichtung der Montagenut entgegenwirkt. Alternativ oder zusätzlich kann der Stiftabschnitt zu einer Zentrierung in der Öffnung beitragen. Die Öffnung zum Eingreifen des Stiftelements kann alternativ auch zur Verschraubung zweier parallel und nebeneinander angeordneter Konstruktionsprofile mit Hilfe eines Kulissensteins genutzt werden, wobei der Kulissenstein in die beiden angrenzenden Montagenuten der zu verbindenden Konstruktionsprofile eingesetzt und dort verschraubt ist. Die beiden Konstruktionsprofile sind dann bevorzugt formschlüssig und kraftschlüssig miteinander verbunden.

Alternativ oder zusätzlich kann das Montageelement auf der dem Verbindungsabschnitt abgewandten Seite eine Verblendung zur wenigstens teilweisen Verblendung des Konstruktionsprofils an der dem Montageelement zugeordneten Seite aufweisen. Dabei ist die Verblendung der Einfachheit halber vorzugsweise aus Holz, Metall und/oder Kunststoff gebildet. Wenn die Verblendung des Konstruktionsprofils an der dem Montageelement zugeordneten Seite wenigstens im Wesentlichen vollständig verblendet, ist das eigentliche Konstruktionsprofil von dieser Seite nicht mehr zu erkennen. Außerdem kann die entsprechende Sichtseite einfach und schnell mit bedarfsweise wechselnden Designs versehen werden.

Um eine Decklage auf dem Konstruktionsprofil abstützen und mit dem Konstruktionsprofil gegenüber einem Abheben sichern zu können, kann wenigstens ein Profilelement eine sich in Längsrichtung des Konstruktionsprofils erstreckende, vorzugsweise dem dem Verbindungsabschnitt abgewandten Ende des Profilelements zugeordnete, Decklagenarretierungsnut aufweisen. Diese Decklagenarretierungsnut dient dann bedarfsweise der formschlüssigen Sicherung einer Decklage gegenüber einem Abheben vom Konstruktionsprofil und kann in einfacher Weise bereitgestellt werden, indem die wenigstens eine Decklagenarretierungsnut durch Strangpressen des Konstruktionsprofils gebildet wird.

Der einfacheren Konstruktion halber ist die wenigstens eine Decklagenarretierungsnut vorzugsweise zur selben Seite wie wenigstens eine Montagenut geöffnet. So kann von derselben Seite zu Montagezwecken in die Montagenut und in die Decklagenarretierungsnut eingegriffen werden, was die Bildung einer Rahmenkonstruktion vereinfacht und beschleunigt.

Bei einer ersten besonders bevorzugten Ausgestaltung der Rahmenkonstruktion ist auf den umlaufend angeordneten Konstruktionsprofilen eine, vorzugsweise vollflächige Decklage, insbesondere aus Holz, Metall und/oder Kunststoff, aufgelegt. Die Decklage kann somit betreten und die Rahmenkonstruktion zur Bildung einer Bühne, eines Podests oder einer Tribüne genutzt werden. Zur Sicherung der Decklage gegenüber einem Abheben von einer Rahmenkonstruktion kann die Decklage oder wenigstens ein die Decklage bildendes Decklagenelement wenigstens mit einigen der Konstruktionsprofile, insbesondere durch Eingreifen eines Arretierungsmittels in wenigstens eine Decklagenarretierungsnut, formschlüssig gesichert sein. Bedarfsweise kann die Decklage an ihrer Unterseite wenigstens ein Arretierungsmittel in Form einer Lasche aufweisen, die, insbesondere von der Oberseite, schwenkbar sein kann. Die Lasche greift dann in einer Arretierungsstellung formschlüssig in die Decklagenarretierungsnut ein. Die Lasche kann zudem aus der Arretierungsstellung außer Eingriff mit der Decklagenarretierungsnut geschwenkt werden, und zwar beispielsweise in eine Nichtarretierungsstellung.

Nachfolgend wird die Erfindung anhand einer lediglich Ausführungsbeispiele darstellenden Zeichnung näher beschrieben. In der Zeichnung zeigt
- Fig. 1: eine erfindungsgemäße Rahmenkonstruktion umfassend erfindungsgemäße Konstruktionsprofile in einer perspektivischen Ansicht,
- Fig. 2: das Konstruktionsprofil aus Fig. 1 mit einem Montageelement in einer Schnittansicht,
- Fig. 3A-C: das Montageelement aus Fig. 2 in einer Draufsicht, einer Seitenansicht und einer perspektivischen Ansicht,
- Fig. 4: ein zweites erfindungsgemäßes Konstruktionsprofil in Form eines Zwischenriegelprofils aus Fig. 1 in einer Schnittansicht,
- Fig. 5: ein drittes erfindungsgemäßes Konstruktionsprofil mit dem Montageelement aus Fig. 3 in einer Schnittansicht,
- Fig. 6: das erste erfindungsgemäße Konstruktionsprofil mit einem alternativen Montageelement und einer Verblendung in einer Schnittansicht,
- Fig. 7A-D: das Montageelement aus Fig. 6 in einer Draufsicht, einer Seitenansicht, einer Rückansicht und einer perspektivischen Ansicht und
- Fig. 8: das Konstruktionsprofil aus Fig. 2 der Rahmenkonstruktion aus Fig. 1 mit einer verbundenen Decklage.

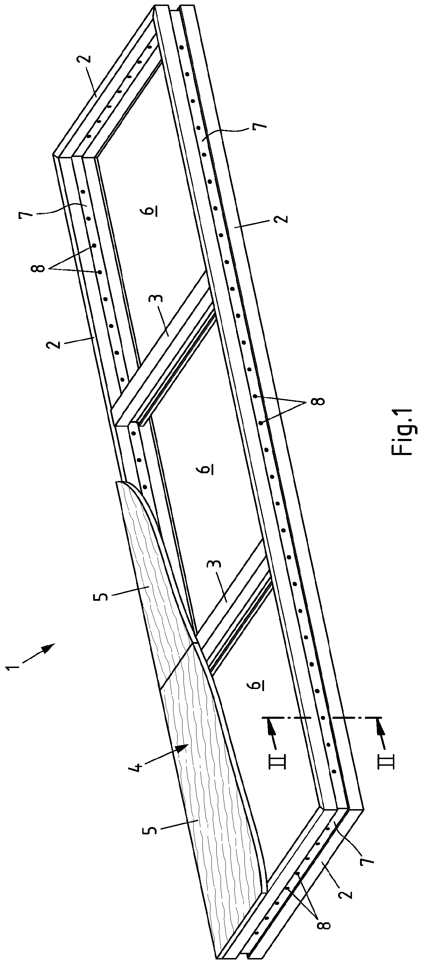

In der Fig. 1 ist eine Rahmenkonstruktion 1 dargestellt, die in größerer Anzahl zu einer Bühne, einem Podest oder einer Tribüne zusammengesetzt werden kann. Ergänzend kommen dann bedarfsweise noch andere Bauteile wie beispielsweise Stützen, Beine, Geländer, Treppen hinzu. Die Rahmenkonstruktion 1 ist rechteckig ausgebildet und weist vier umlaufende Konstruktionsprofile 2 in Form von Zargenprofilen auf, die an ihren Längsenden mit Gehrungen versehen und miteinander verschweißt sind. In Längsrichtung der Rahmenkonstruktion 1 sind in regelmäßigen Abständen weitere Konstruktionsprofile 3 in Form von Zwischenriegelprofilen vorgesehen, die sich bei der dargestellten Rahmenkonstruktion 1 von den Zargenprofilen unterscheiden. Dies ist jedoch nicht zwingend. Auf die Rahmenkonstruktion 1 kann eine Decklage 4 aufgelegt werden, die aus mehreren Decklagenelementen 5 bestehen kann. Die Decklagenelemente 5 sind dabei vorzugsweise als Holzplatten ausgebildet. Bei der dargestellten und insofern bevorzugten Rahmenkonstruktion 1 werden vorzugsweise in Längsrichtung der Rahmenkonstruktion 1 drei rechteckige Decklagenelemente 5 der Decklage 4 angeordnet, welche die drei Öffnungen 6 in der Rahmenkonstruktion 1 verschließen. Die Decklagenelemente 5 erstrecken sich dabei jeweils über die gesamte Breite der Rahmenkonstruktion 1 und bedecken jeweils die umlaufenden Konstruktionsprofile 2 in Form der Zargenprofile vollständig. Die Decklagenelemente 5 stoßen an den Konstruktionsprofilen 3 in Form der Zwischenriegelprofile aneinander, wobei jedes Decklagenelement 5 ein Zwischenriegelprofil 3 zur Hälfte überdeckt. Vor diesem Hintergrund sind die Zwischenriegelprofile 3 vorzugsweise doppelt so breit ausgebildet, wie die Konstruktionsprofile 2 in Form der Zargenprofile.

Die Konstruktionsprofile 2,3 weisen bei der dargestellten und insoweit bevorzugten Rahmenkonstruktion 1 an gegenüberliegenden Seiten Montagenuten 7 auf, entlang derer in regelmäßigen Abständen Öffnungen 8 vorgesehen sind. Die Montagenuten 7 können beispielsweise dem Verbinden zweier benachbarter und parallel zueinander ausgerichteter Konstruktionsprofile 2,3 oder Rahmenkonstruktionen 1 dienen. Dazu wird ein Kulissenstein in die aneinandergrenzenden Montagenuten 7 der entsprechenden Konstruktionsprofile 2,3 oder Rahmenkonstruktionen 1 eingesetzt, der den Querschnitt der aneinandergrenzenden Montagenuten 7 wenigstens im Wesentlichen vollständig ausfüllen kann und durch die Öffnungen 8 in den Montagenuten 7 mit den zu verbindenden Konstruktionsprofilen 2,3 verschraubt werden kann. Die Öffnungen 8 können neben dem Verbinden von Konstruktionsprofilen 2,3 auch dem Anbinden anderer Bauteile, etwa durch Verschrauben, dienen.

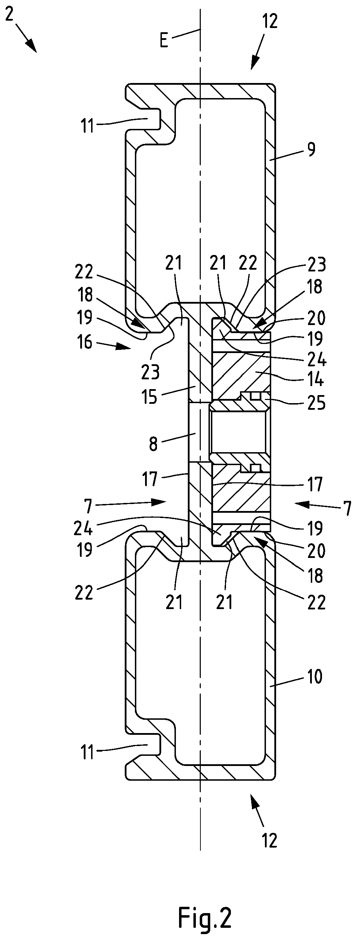

In der Fig. 2 ist ein Konstruktionsprofil 2 der Rahmenkonstruktion 1 aus Fig. 1 dargestellt. Damit ein auf das Konstruktionsprofil 2 aufgelegtes Decklagenelement 5 bzw. eine Decklage 4 gegenüber einem Abheben vom Konstruktionsprofil 2 gesichert werden kann, weist das Konstruktionsprofil 2 an einem Profilelement 9,10 an gegenüberliegenden Seiten jeweils eine sich in Längsrichtung des Konstruktionsprofils 2 erstreckende Decklagenarretierungsnut 11 auf. Die dargestellte und insoweit bevorzugte Decklagenarretierungsnut 11 wird im Wege des Strangpressens hergestellt. Das Decklagenelement 5 liegt bedarfsweise auf einer Stirnseite 12 des Konstruktionsprofils 2 auf. Die Decklagenarretierungsnuten 11 sind seitlich zu der Stirnseite 12 angeordnet und geöffnet. Zudem sind die Decklagenarretierungsnuten 11 jeweils einer Stirnseite 12 des Konstruktionsprofils 2 zugeordnet und insbesondere nahe an jeweils einer Stirnseite 12 angeordnet. So kann zur formschlüssigen Sicherung eines Decklagenelements 5 gegenüber einem Abheben vom Konstruktionsprofil 2 wenigstens eine Lasche wenigstens eines Decklagenelements 5 bzw. einer Decklage 4 in die Decklagenarretierungsnut 11 formschlüssig eingreifen. Da sich die Decklagenarretierungsnut 11 entlang des gesamten Konstruktionsprofils 2 erstreckt, kann der Formschluss an beliebigen Stellen des Konstruktionsprofils 2 erfolgen.

Des Weiteren sind die umlaufend vorgesehenen Konstruktionsprofile 2 gleichartig ausgebildet, so dass die Decklagenelemente 5 bzw. die Decklage 4 an unterschiedlichen Rändern in Decklagenarretierungsnuten 11 unterschiedlicher Konstruktionsprofile 2 eingreifen können. Im Übrigen können auch die Konstruktionsprofile 3 in Form der Zwischenriegelprofile der Rahmenkonstruktion 1 entsprechende Decklagenarretierungsnuten 11 aufweisen, so dass die Decklagenelemente 5 bzw. die Decklage 4 auch formschlüssig in einer Decklagenarretierungsnut 11 eines Zwischenriegelprofils gegenüber einem Abheben gesichert sein kann.

Der Formschluss zwischen einer Decklagenarretierungsnut 11 und einem Decklagenelement 5 bzw. einer Decklage 4 wird beispielsweise durch eine Lasche erreicht, die am Decklagenelement 5 bzw. der Decklage 4 schwenkbar gehalten ist. Die Lasche kann dann zur Arretierung des Decklagenelements 5 bzw. der Decklage 4 seitlich in die Decklagenarretierungsnut 11 hineingeschwenkt werden. Um das Decklagenelement 5 wieder zu demontieren, kann die Lasche wieder aus der Decklagenarretierungsnut 11 herausgeschwenkt werden.

Das in der Fig. 2 dargestellte Konstruktionsprofil 2 weist zudem in einer der beiden an einander gegenüberliegenden Seiten angeordneten Montagenuten 7 ein Montageelement 14 auf. Dabei umfasst das Konstruktionsprofil 2 zwei Profilelemente 9,10, die als Hohlprofilelemente mit geschlossenen Querschnitten ausgebildet sind. Die Profilelemente 9,10 haben jeweils einen rechteckigen Querschnitt und sind jeweils gleich groß ausgebildet. Zwischen den Profilelementen 9,10 und mit den Profilelementen 9,10 verbunden ist ein Verbindungsabschnitt 15 vorgesehen, der die Form eines Stegs aufweist. Die Profilelemente 9,10 sind an den beiden gegenüberliegenden Enden des Verbindungsabschnitts 15 angebunden. Der Verbindungsabschnitt 15 definiert dabei eine Ebene E, die im Wesentlichen als Symmetrieebene des Konstruktionsprofils 2 angesehen werden kann.

Das Konstruktionsprofil 2 weist an den einander gegenüberliegenden Seiten des Verbindungsabschnitts 15 zwei Montagenuten 7 auf. Die Montagenuten 7 weisen Öffnungen 16 auf, die zu gegenüberliegenden Seiten des Verbindungsabschnitts 15 weisen und jeweils zwischen den Profilelementen 9,10 angeordnet sind. Der Verbindungsabschnitt 15 bildet zudem den Nutgrund 17 jeder der beiden Montagenuten 7. Die Flanken 18 der Montagenuten 7 werden jeweils von den beiden Profilelementen 9,10 gebildet. Beim dargestellten und insoweit bevorzugten Konstruktionsprofil 2 ist in der rechts dargestellten Montagenut 7 ein Montageelement 14 aufgenommen und der Nutgrund 17 der Montagenuten 7 wenigstens im Wesentlichen eben ausgebildet. Die Flanken 18 der Montagenuten 7 weisen zwei gegenüberliegende, ebene und parallel zueinander ausgerichtete Montageflächen 19 auf. Das dargestellte und insoweit bevorzugte Montageelement 7 weist an gegenüberliegenden Seiten des Montageelements 14 korrespondierende Montageflächen 20 auf, die an den Montageflächen 19 der zugehörigen Montagenut 7 anliegen und dort eine kraftschlüssige Verbindung bilden, die einem Verschieben des Montageelements 14 in Längsrichtung der Montagenut 7 entgegenwirkt.

Die Montagenuten 7 weisen an den Flanken 18 der Montagenuten 7 zudem Haltenuten 21 auf, wobei die dargestellten und insoweit bevorzugten Haltenuten 21 in die Nutgründe 17 der Montagenuten 7 übergehen. Die Haltenuten 21 bilden gesehen von den Öffnungen 16 der Montagenuten 7 Hinterscheidungen 22 mit Halteflächen 23 für Montageelemente 14. Die Montageelemente 14 weisen Halteabschnitte 24 auf, die in die Haltenuten 21 eingesetzt werden und sich gegen die Halteflächen 23 der Haltenuten 21 abstützen können. Bei den dargestellten und insoweit bevorzugten Haltenuten 21 sind die Halteflächen 23 in Richtung des Nutgrunds 17 der Haltenuten 21 weg von der Öffnung 16 der Montagenut 7 nach innen bezogen auf das Konstruktionsprofil 2 gerichtet. Das in die Montagenut 7 eingesetzte Montageelement 14 ist durch das Hintergreifen der Hinterschneidung 22 durch die Halteabschnitte 24 formschlüssig in der Montagenut 7 gehalten, auch wenn bei dem dargestellten und insoweit bevorzugten Montageelement 14 die formschlüssige Verbindung ein Spiel aufweist. In der Längsrichtung des Konstruktionsprofils 2 ist das Montageelement 14 kraftschlüssig über den Reibschluss zwischen den Montageflächen 19,20 in der Montagenut 7 gehalten.

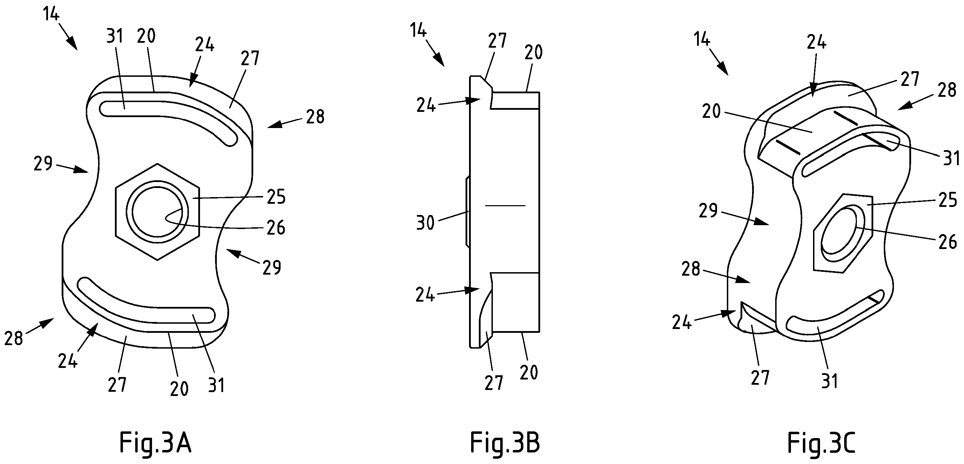

In den Fig. 3A-C ist das Montageelement 14 separat dargestellt. Das Montageelement 14 ist überwiegend aus einem Kunststoff gefertigt und weist eine zentrale Hülse 25 auf, in der ein Innengewinde 26 vorgesehen ist. Die Hülse 25 ist bei dem dargestellten und insoweit bevorzugten Montageelement 14 aus Metall gebildet und fest im angrenzenden Kunststoff gehalten. Die Hülse 25 ist nach außen geöffnet, so dass von außen ein korrespondierendes Außengewinde eines mit dem Montageelement 14 zu verbindenden Bauteils in die Hülse 15 eingeschraubt werden kann.

Zu zwei gegenüberliegenden Seiten des Montageelements 14 stehen die Halteabschnitte 24 nach außen vor, die in die Haltenuten 21 der Montagenut 7 eingreifen können. Dabei sind die Haltenuten 21 und die Halteabschnitte 24 im Wesentlichen korrespondierend zueinander ausgebildet. Insbesondere sind bei dem Montageelement 14 die Halteflächen 27 der Halteabschnitte 24 korrespondierend zu den Halteflächen 24 der Haltenuten 21 der Montagenuten 7 ausgebildet. Angrenzend zu den Halteabschnitten 27 sind die Montageflächen 20 zur kraftschlüssigen Arretierung der Montageelemente 14 in der Montagenut 7 vorgesehen. Wiederum angrenzend zu den Montageflächen 20 im Uhrzeigersinn sind Abrundungen 28 vorgesehen, die es erlauben, das Montageelement 14 schräg in die Montagenut 7 einzusetzen und dann um eine zentrale Drehachse mit den Halteabschnitten 24 in die Haltenuten 21 einzudrehen, ohne dass dies durch eine vorzeitige Anlage des Montageelements 14 an den Montageflächen 19 der Montagenut 7 verhindert werden kann. Dabei ist eine gleichförmige Abrundung 28 zum Zecke der Führung des Montageelements 14 beim Eindrehen der Halteabschnitte 24 in die Haltenuten 21 bevorzugt. Es könnte aber auch eine andere Abrundung oder auch eine Abschrägung vorgesehen werden. Wesentlich hierbei ist, dass es beim Eindrehen des Montageelements in die Montagenut 7 nicht zu einem Blockieren der Drehbewegung infolge überschüssigen Materials des Montageelements kommt.

Zwischen den Halteelementen 27 sind Einbuchtungen 29 zur Aufnahme der Finger beim händischen Eindrehen 29 des Montageelements 14 in die Montagenut 7 vorgesehen. Zwingend erforderlich ist dies jedoch nicht. Es ist auch nicht erforderlich, aber dennoch bevorzugt, dass auf der dem Nutgrund 17 zugewandten Seite des Montageelements 14 dieses einen Stiftabschnitt 30 aufweist, der nach außen vorsteht. Der Stiftabschnitt 30 kann in eine Öffnung 8 im Nutgrund 17 der Montagenut 7 bzw. im Verbindungsabschnitt 15 des Konstruktionsprofils 2 eingreifen, um so für eine formschlüssige Verbindung des Montageelements 14 mit dem Konstruktionsprofil 2 in dessen Längsrichtung zu sorgen. Der Stiftabschnitt 30 sorgt bedarfsweise auch zu einer Zentrierung des Montageelements 14 in der Öffnung 8, etwa um das Montageelement 14 beim Drehen in der Montagenut 7 exakt zu positionieren.

Insbesondere bei in die Öffnung 8 eingreifendem Stiftelement 30 können mit dem Montageelement statisch tragende Elemente verbunden und/oder verschraubt werden, und zwar etwa Geländer, Konsolen und schwere Verblendungen. Da das dargestellte und insoweit bevorzugte Montageelement 14 senkrecht zur Längserstreckung der Montagenut 7 und senkrecht zum Nutgrund 17 mit einem Spiel in der Montagenut 7 aufgenommen sein kann, kann das Montageelement 14 auch neben einer entsprechenden Öffnung 8 in der Montagenut 17 montiert werden. Der Stiftabschnitt 30 liegt dann bedarfsweise am Nutgrund 17 der Montagenut 7 an. Dies kommt insbesondere für die Montage von leichten Verblendungen, Schienen für Vorhänge, leichten Dekorationsteilen und Lichtleisten an den Montageelementen 14 in Frage.

Das dargestellte und insoweit bevorzugte Montageelement 14 weist den beiden Montageflächen 20 zugeordnet jeweils eine Aussparung 31 auf. Die Aussparung 31 ist zudem schlitzförmig ausgebildet. Dabei sind die Aussparungen 31 als durch das Montageelement 14 hindurchreichende Öffnungen, etwa parallel zu den Montageflächen 20 und so nahe an den Montageflächen 20 ausgebildet, dass die Montageflächen 20 beim Eindrehen in die Montagenut 7 infolge der Anlage an den Montageflächen 19 der Montagenut 7 geringfügig in Richtung des Zentrums des Montageelements 14 gedrückt werden können. So wird einerseits ein Eindrehen bei in Umfangsrichtung des Montageelements 14 langen Montageflächen 20 erreicht. Ohne das Eindrücken des Montageelements 14 im Bereich der Montageflächen 20 würde das Montageelement 14 bedarfsweise nicht vollständig eingedreht werden können, sondern sich in der Montagenut 7 verkeilen. Andererseits wird durch die entsprechende elastische Deformation des Montageelements 14 im Bereich der Montageflächen 20 eine Rückstellkraft erzeugt, die die Montageflächen 20 des Montageelements 14 gegen die Montageflächen 19 der Montagenut 7 pressen, um so für einen hinreichenden Reibschluss bzw. Kraftschluss zwischen den Montageflächen 19,20 zu sorgen.

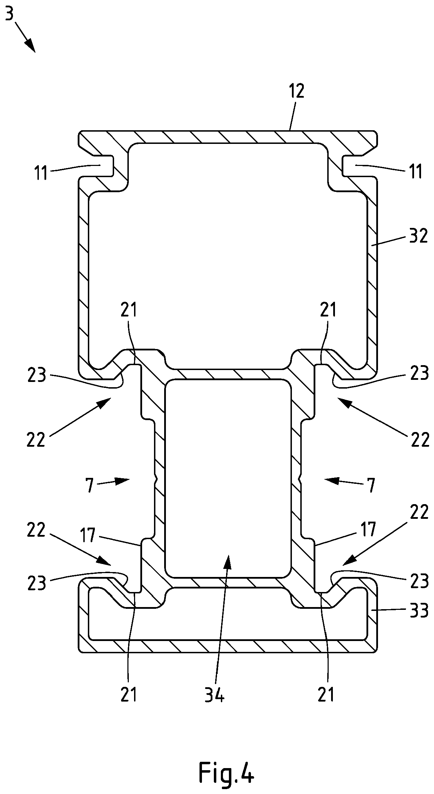

In der Fig. 4 ist ein Konstruktionsprofil 3 in Form eines Zwischenriegelprofils dargestellt, das die beiden in Längsrichtung der Rahmenkonstruktion 1 gemäß Fig. 1 verlaufenden Konstruktionsprofile 2 in Form von Zargenprofilen miteinander verbinden. Das Konstruktionsprofil 3 der Fig. 4 weist dabei, wie das Konstruktionsprofil 2 der Fig. 2, an einander gegenüberliegenden Seiten jeweils eine Montagenut 7 auf, die sich in Längsrichtung des Konstruktionsprofils 3 erstrecken. Die Montagenuten 7 weisen Halteflächen 23, Haltenuten 21 und Montageflächen 19 auf, wie sie bereits im Zusammenhang mit dem Konstruktionsprofil 2 gemäß Fig. 2 beschrieben worden sind. Im Unterschied zu diesem Konstruktionsprofil 2 weist das Konstruktionsprofil 3 gemäß Fig. 4 eine sich in Längsrichtung des Konstruktionsprofils 3 erstreckende Aussparung im Bereich des Nutgrunds 17 der Montagenut 7 auf, die der Materialeinsparung dient. Des Weiteren sind die die Nutflanken 18 der Montagenuten bildende Profilelemente 32,33 nicht wenigstens im Wesentlichen gleichartig ausgebildet. Beide Profilelemente 32,33 gleichen sich insoweit, als dass sie Hohlprofilelemente mit einem wenigstens im Wesentlichen geschlossenen Querschnitt aufweisen, die mit dem dazwischen angeordneten Verbindungsabschnitt 34 verbunden sind. Die Profilelemente 32,33 bzw. die Hohlprofilelemente sind zwar auch gleich breit ausgebildet, allerdings ist die Erstreckung der Profilelemente 32,33 bzw. der Hohlprofilelemente in der jeweiligen von dem Verbindungsabschnitt 34 abgewandten Richtung sehr unterschiedlich ausgeprägt. Das Längenverhältnis beträgt dabei wenigstens 1:2, insbesondere wenigstens 1:3. Das Konstruktionsprofil 3 gemäß Fig. 4 ist nicht nur breiter, insbesondere etwa doppelt so breit, wie das Konstruktionsprofil 2 gemäß Fig. 2, sondern bildet zudem selbst ein Hohlprofilelement mit einem wenigstens im Wesentlichen geschlossenen Querschnitt. Die den Montagenuten 7 zugewandten Seiten des Verbindungsabschnitts 34 bilden jeweils einen Nutgrund 17 einer Montagenut 7.

Ein auf das Konstruktionsprofil 3 aufgelegtes Decklagenelement 5 kann gegenüber einem Abheben vom Konstruktionsprofil 3 gesichert werden. Zu diesem Zweck weist das Konstruktionsprofil 3 an einem Profilelement 32 an gegenüberliegenden Seiten jeweils eine sich in Längsrichtung des Konstruktionsprofils 3 erstreckende Decklagenarretierungsnut 11 auf. Die Decklagenarretierungsnut 11 wird im Wege des Strangpressens hergestellt. Zur formschlüssigen Sicherung eines Decklagenelements 5 gegenüber einem Abheben vom Konstruktionsprofil 3 kann eine Lasche des Decklagenelements 5 in die Decklagenarretierungsnut 11 hineingeschwenkt werden. Um das Decklagenelement 5 wieder zu demontieren, kann die Lasche wieder aus der Decklagenarretierungsnut 11 herausgeschwenkt werden, wie dies nachfolgend noch für das Konstruktionsprofil 2 gemäß Fig. 2 in Form eines Zargenprofils beschrieben wird.

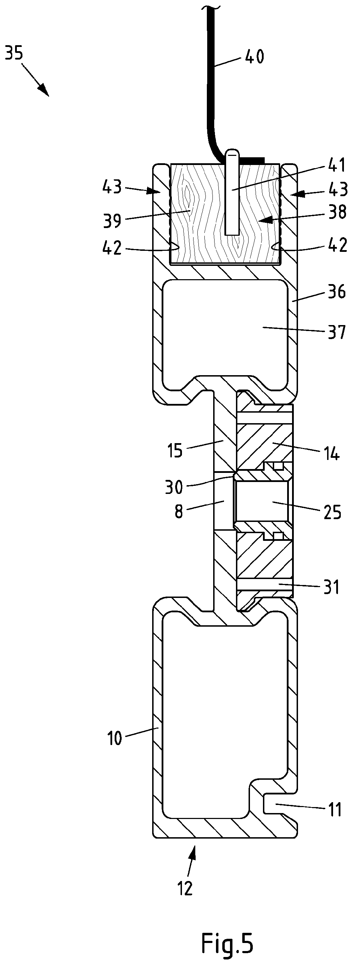

Bei dem in der Fig. 5 dargestellten Konstruktionsprofil 35 handelt es sich um ein solches, das sich im Wesentlichen dadurch von dem Konstruktionsprofil 2 gemäß Fig. 2 unterscheidet, als dass ein Profilelement 36 ein mit dem Verbindungsabschnitt 15 verbundenes Hohlprofilelement 37 mit einem wenigstens im Wesentlichen umlaufend geschlossenen Querschnitt und eine U-förmige Aufnahmenut 38 zur Aufnahme eines Fremdelements 39, insbesondere aus Holz oder Kunststoff, vorgesehen ist. Das Hohlprofilelement 37 ist dabei zwischen der Aufnahmenut 7 und dem Verbindungsabschnitt 15 des Konstruktionsprofils 35 vorgesehen. Bei dem dargestellten und insoweit bevorzugten Konstruktionsprofil 35 ist das Hohlprofilelement 37 direkt mit der Aufnahmenut 38 und dem Verbindungsabschnitt 15 verbunden. Zudem sind das Hohlprofilelement 37 und die Aufnahmenut 38 gleich breit vorgesehen. Die Seiten des Hohlprofilelements 37 und der Aufnahmenut 38 fluchten zudem miteinander.

Die U-förmige Aufnahmenut 38 dient dabei beispielsweise dem Abspannen eines Dekoelements 40, etwa in Form eines Bespannmittels, das durch ein Verbindungsmittel 41 mit dem Fremdelement 39 verbunden werden kann. Als Verbindungsmittel kommt beispielsweise Heften, Tackern, Nageln und oder Schrauben in Frage, wobei das Bespannmittel beispielsweise eine Folie oder ein Stoff sein kann. Das Fremdelement 39 ist bei dem dargestellten Konstruktionsprofil in die U-förmige Aufnahmenut 38 eingelegt und dort durch an den beiden Nutflanken 42 vorgesehene Widerhakenelemente 43 in der Aufnahmenut 38 gehalten. Die Widerhakenelemente 43 erlauben aber dennoch das nachträgliche Herausziehen der Fremdelemente 39 durch eine Auszugskraft, die bei bestimmungsgemäßer Verwendung der Fremdelemente 39 zum Fixieren von Dekoelementen 40, insbesondere Bespannmitteln, nicht auf die Fremdelemente 39 einwirken. Die Abmessungen der Konstruktionsprofile 2,35 gemäß den Fig. 2 und 5 sind trotz der bestehenden Unterschiede wenigstens im Wesentlichen identisch oder wenigstens gleichartig. In der Rahmenkonstruktion 1 gemäß Fig. 1 kann somit ein oder mehrere der Konstruktionsprofile 2,3 gemäß Fig. 2 und/oder Fig. 4 durch ein oder mehrere der Konstruktionsprofile 35 der Fig. 5 ersetzt werden.

Bei dem Konstruktionsprofil 35 gemäß Fig. 5 ist ein Profilelement 10 analog zu den Profilelementen 10 des Konstruktionsprofils 2 gemäß Fig. 2 ausgebildet. Dieses weist in gleicher Weise wie das Konstruktionsprofil 2 der Fig. 2 eine seitlich geöffnete und benachbart zur Stirnseite 12 angeordnete Decklagenarretierungsnut 11 auf. Wenn ein Decklagenelement 5 oder eine Decklage 4 auf die entsprechende und von der U-förmigen Aufnahmenut 38 abgewandten Stirnseite 12 des Konstruktionsprofils 35 aufgelegt wird, kann dieses bedarfsweise mit einer schwenkbar an dem Decklagenelement 5 bzw. der Decklage 4 gehaltenen Lasche in der Decklagenarretierungsnut 11 gesichert werden. Bedarfsweise wird dazu die Lasche formschlüssig von einer Seite des Konstruktionsprofils 35 in die Decklagenarretierungsnut 11 geschwenkt.

Ein Abheben der Decklage 4 bzw. des Decklagenelements 5 vom Konstruktionsprofil 35 kann so verhindert und erst durch ein Herausschwenken der Lasche aus der Decklagenarretierungsnut 11 wieder ermöglicht werden. Zu diesem Zweck kann die Lasche schwenkbar an der Decklage 4 bzw. dem Decklagenelement 5 verschraubt oder anderweitig angeordnet sein. Da sich die Decklagenarretierungsnut 11 in Längsrichtung des Konstruktionsprofils 35 erstreckt, ist die formschlüssige Verbindung zwischen Decklage 4 und Konstruktionsprofil 35 nicht an einen bestimmten Ort entlang des Konstruktionsprofils 35 gebunden.

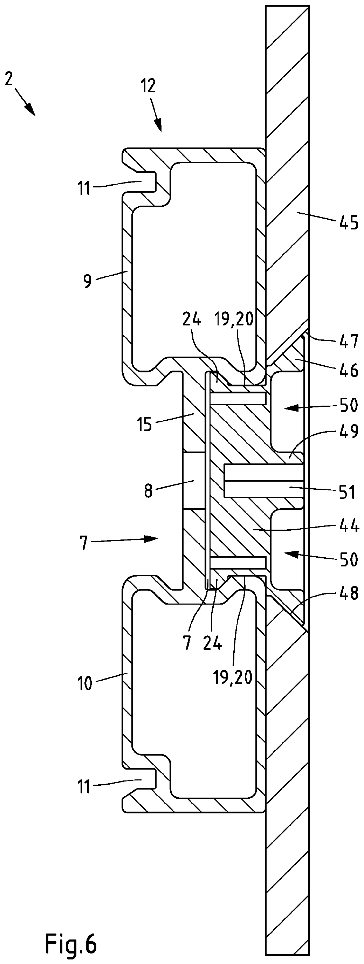

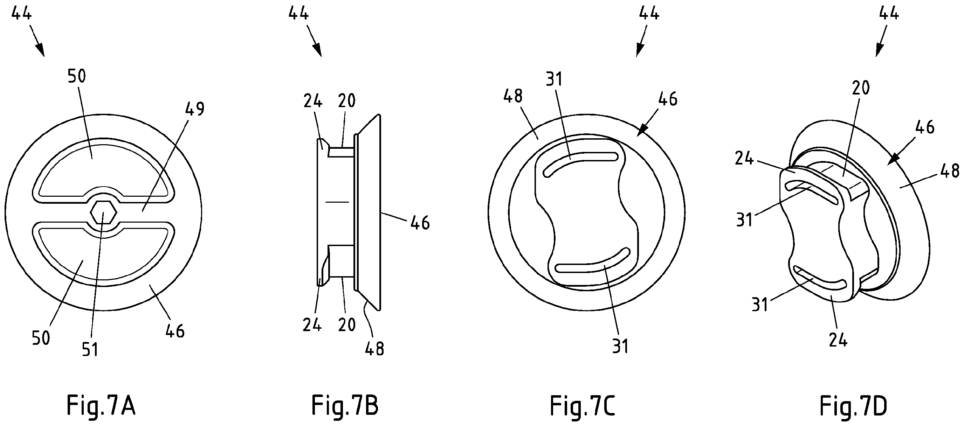

In der Fig. 6 ist ein Konstruktionsprofil 2 gemäß Fig. 2 in einer Schnittansicht mit einem alternativen Montageelement 44 dargestellt, das der Verblendung des Konstruktionsprofils 2 dient. Das Montageelement 44 ist separat in den Fig. 7A-D in unterschiedlichen Ansichten dargestellt. Das Konstruktionsprofil 2 entspricht wenigstens im Wesentlichen dem Konstruktionsprofil 2 gemäß Fig. 2. Auch das in der Fig. 6 gargestellte Montageelement 44 entspricht in weiten Teilen dem Montageelement 14 gemäß Fig. 2, jedoch mit dem Unterschied, dass das Montageelement 44 an der von der Montagenut 7 abgewandten Seite eine Verblendung 45 aufweist, die aus einem Holzwerkstoff, einem metallischen Werkstoff und/oder einem Kunststoff gebildet sein kann. Beim dargestellten und insoweit bevorzugten Montageelement 44 ist zur Verbindung des Montageelements 44 mit der Verblendung 45 auf der der Montagenut 7 abgewandten Seite des Montageelements 44 ein umlaufender und radial nach außen vorstehender Kragenabschnitt 46 vorgesehen, der in eine Öffnung 47 der Verblendung 45 eingesetzt werden kann. Der Kragenabschnitt 46 und die Öffnung 47 sind dabei so ausgebildet, dass ein Formschluss gebildet wird, der im in der Montagenut 7 montierten Zustand des Montageelements 44 die Verblendung 45 gegenüber einem Abziehen nach außen sichert. Zum Zwecke der Zentrierung der Verblendung 45 weisen der Kragenabschnitt 46 und die Verblendung 45 schräg nach außen geneigte, korrespondierende Anlageflächen 48 zur gegenseitigen Anlage aneinander auf. Anstelle und/oder zusätzlich zu der formschlüssigen Verbindung kann auch eine stoffschlüssige Verbindung, insbesondere eine Klebeverbindung vorgesehen sein.

Bei dem dargestellten und insoweit bevorzugten Montageelement 44 sind zudem auf gegenüberliegenden Seiten angrenzend zu einem Stegabschnitt 49 zwei Vertiefungen 50 vorgesehen, so dass der Stegabschnitt 49 von einem Benutzer ergriffen und das Montageelement 44 in die Montagenut 7 eingedreht werden kann, bis der Halteabschnitt 24 in die Haltenut 7 eingreift und die Montageflächen 19,20 von Montageelement 44 und Montagenut 7 kraftschlüssig aneinander anliegen. Das Eindrehen des Montageelements 44 kann alternativ oder zusätzlich mit Hilfe eines Werkzeugs erfolgen, das in eine Öffnung 51 des Montageelements eingesteckt werden kann, die einen Innensechskant bildet, so dass das Montageelement 44 durch Einstecken eines Außensechskants in die Öffnung 51 in die Montagenut 7 eingedreht werden kann. Des Weiteren ragt die dargestellte und insoweit bevorzugte Verblendung 45 zu beiden Seiten über das Konstruktionsprofil 2 hinaus. Grundsätzlich könnte es aber auch ausreichen, wenn sich die Verblendung wenigstens im Wesentlichen bis zu den Rändern des Konstruktionsprofils 2 erstreckt. Die Verblendung 45 erstreckt sich zudem vorzugsweise wenigstens entlang der gesamten Längserstreckung des Konstruktionsprofils 2.

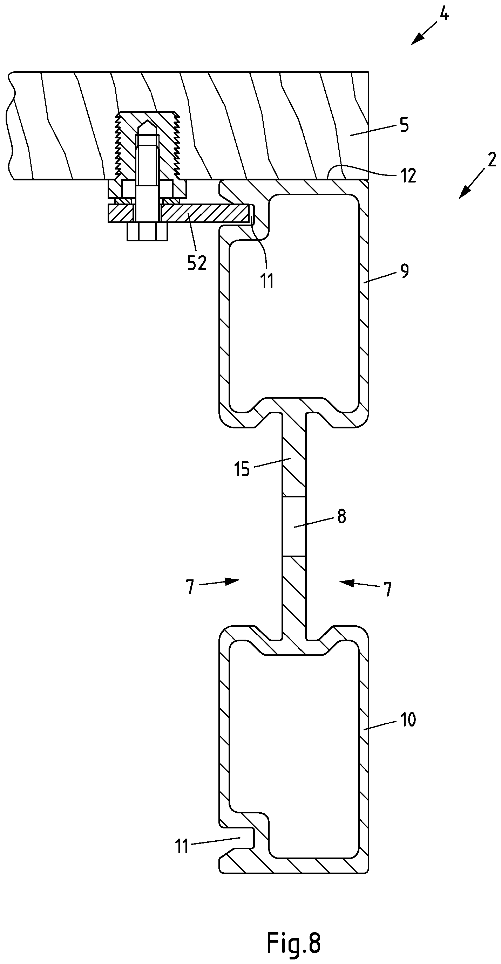

In der Fig. 8 ist das Konstruktionsprofil 2 aus Fig. 2 der Rahmenkonstruktion 1 aus Fig. 1 in einem mit einem Decklagenelement 5 verbundenen Zustand dargestellt. Das Decklagenelement 5 liegt auf der dem Verbindungsabschnitt 15 abgewandten Seite eines Profilelements 9 auf. Zum Verbinden mit dem Konstruktionsprofil 2 weist das Decklagenelement 5 zudem eine schwenkbare Lasche 52 auf, die mit einem freien Ende in eine Decklagenarretierungsnut 11 des Konstruktionsprofils 2 eingeschwenkt werden kann. Dies kann in gleicher Weise an unterschiedlichen Stellen des Randes des Decklagenelements 5 erfolgen. Bevorzugt ist es dabei, wenn die Laschen 52 des Decklagenelements 5 in Decklagenarretierungsnuten 11 mehrerer umlaufend zum Decklagenelement 5 angeordneten Konstruktionsprofilen 2,3,35 formschlüssig eingreifen. Infolge des Formschlusses wird ein versehentliches Abheben der Decklagenelemente 5 von den Konstruktionsprofilen 2,3,35 verhindert. An dem unteren Ende des Konstruktionsprofils 2 ist eine Decklagenarretierungsnut 11 ausgebildet, die wenigstens im Wesentlichen der Decklagenarretierungsnut 11 am oberen Ende des Konstruktionsprofils 2 entspricht. Dadurch wird die Montage der Konstruktionsprofile 2 vereinfacht. Ist eine Decklagenarretierungsnut 11 auf der falschen Seite angeordnet, muss das Konstruktionsprofil 2 lediglich um seine Längsachse, nicht aber um eine Achse senkrecht dazu, gedreht werden, damit eine Decklagenarretierungsnut 11 an der richtigen Seite angeordnet ist. Dies ist bedeutsam, da die Konstruktionsprofile 2 oftmals mehrere Meter lang und dementsprechend aufwendig zu handhaben sind.

Die Verbindung des Decklagenelements 5 kann auf die zuvor beschriebene Weise auch mit einem Konstruktionsprofil 3 in Form eines Zwischenriegelprofils gemäß Fig. 4 erfolgen. Derartige Konstruktionsprofile 3 tragen dabei bedarfsweise Ränder von gegenüberliegenden Seiten angrenzenden Decklagenelementen 5 der Decklage 4. Deshalb weisen die Konstruktionsprofile 3 auch an gegenüberliegenden Seiten eines Profilelements 32 jeweils eine Decklagenarretierungsnut 11 auf. Die Decklagenarretierungsnuten 11 sind dabei wenigstens im Wesentlichen gleichartig oder identisch ausgebildet. Zudem sind die Konstruktionsprofile 3 wenigstens etwa doppelt so breit wie das Konstruktionsprofil 2 gemäß Fig. 8, so dass die beiden von gegenüberliegenden Seiten aufgelegten Decklagenelemente 5 wenigstens etwa dieselbe Auflagefläche auf dem Konstruktionsprofil 3 aufweisen, wie dies in der Fig. 8 dargestellt und der Fall ist. Die jeweilige Auflagefläche beträgt beispielsweise zwischen 20 mm und 40 mm, insbesondere etwa 30 mm.

Die in den Fig. 2 und 5 dargestellten Konstruktionsprofile 2,35 weisen eine Längserstreckung von mehreren Metern, insbesondere zwischen etwa 2 m und 4 m, auf. Die Erstreckung parallel zum Verbindungsabschnitt 15 und zur Längserstreckung des Konstruktionsprofils 2,35, also von einem Ende eines Profilelements 9,36 zum gegenüberliegenden Ende des anderen Profilelements 10 beträgt dagegen zwischen 50 mm und 250 mm, vorzugsweise zwischen 100 mm und 200 mm, insbesondere zwischen 130 mm und 150 mm. Die Erstreckung der Profilelemente 9,10,36 ist dabei ferner wenigstens im Wesentlichen identisch, und beträgt vorzugsweise zwischen 30 mm und 80 mm, insbesondere zwischen 40 mm und 60 mm. Der Verbindungsabschnitt 15 erstreckt sich in derselben Richtung vorzugsweise zwischen 20 mm und 80 mm, insbesondere zwischen 30 mm und 50 mm. Die Breite des Konstruktionsprofils 2,36, also die Erstreckung senkrecht zum Verbindungsabschnitt 15 beträgt vorzugsweise zwischen 10 mm und 60 mm, insbesondere zwischen 20 mm und 40 mm. Dabei sind die Montagenuten 7 vorzugsweise etwa halb so tief wie die Konstruktionsprofile 2,36 breit. Die Haltenuten 21 sind vorzugsweise zwischen 1 mm und 10 mm, insbesondere zwischen 2 mm und 4 mm tief. Die Decklagenarretierungsnut 11 ist vorzugsweise zwischen 3 mm und 15 mm, insbesondere zwischen 5 mm und 10 mm tief und vorzugsweise zwischen 2 mm bis 10 mm, insbesondere zwischen 3 mm und 5 mm breit. Dagegen kann die Tiefe der Aufnahmenut 38 vorzugsweise 10 mm bis 70 mm, insbesondere 15 mm bis 40 mm, betragen.

Die in der Fig. 4 dargestellten Konstruktionsprofile 3 weisen eine Längserstreckung von mehreren Metern, insbesondere zwischen etwa 2 m und 4 m, auf. Die Erstreckung parallel zum Verbindungsabschnitt 15 und zur Längserstreckung des Konstruktionsprofils 3, also von einem Ende eines Profilelements 32,33 zum gegenüberliegenden Ende des anderen Profilelements 32,33 beträgt dagegen zwischen 50 mm und 250 mm, vorzugsweise zwischen 80 mm und 120 mm, insbesondere zwischen 100 mm und 110 mm. Die Erstreckung des längeren Profilelements 32 beträgt dabei vorzugsweise zwischen 30 mm und 80 mm, insbesondere zwischen 40 mm und 60 mm. Der Verbindungsabschnitt 15 erstreckt sich in derselben Richtung vorzugsweise zwischen 20 mm und 80 mm, insbesondere zwischen 30 mm und 50 mm, und senkrecht dazu vorzugsweise zwischen 10 mm und 80 mm, insbesondere zwischen 20 mm und 50 mm. Die Breite des Konstruktionsprofils 3, also die Erstreckung senkrecht zum Verbindungsabschnitt beträgt vorzugsweise zwischen 20 mm und 120 mm, insbesondere zwischen 40 mm und 80 mm. Dabei sind die Montagenuten 7 vorzugsweise etwa zwischen 5 mm und 40 mm, insbesondere zwischen 10 mm und 20 mm. Die Haltenuten 21 sind vorzugsweise zwischen 1 mm und 10 mm, insbesondere zwischen 2 mm und 4 mm tief. Die Decklagenarretierungsnut 11 ist vorzugsweise zwischen 3 mm und 15 mm, insbesondere zwischen 5 mm und 10 mm tief und vorzugsweise zwischen 2 mm bis 10 mm, insbesondere zwischen 3 mm und 5 mm breit.

### Bezugszeichenliste

- 1: Rahmenkonstruktion
- 2,3: Konstruktionsprofil
- 4: Decklage
- 5: Decklagenelement
- 6: Öffnung
- 7: Montagenut
- 8: Öffnung
- 9,10: Profilelement
- 11: Decklagenarretierungsnut
- 12: Stirnseite
- 14: Montageelement
- 15: Verbindungsabschnitt
- 16: Öffnung
- 17: Nutgrund
- 18: Flanke
- 19: Montagefläche
- 20: Montagefläche
- 21: Haltenut
- 22: Hinterschneidung
- 23: Haltefläche
- 24: Halteabschnitt
- 25: Hülse
- 26: Innengewinde
- 27: Haltefläche
- 28: Abrundung
- 29: Einbuchtung
- 30: Stiftabschnitt
- 31: Aussparung
- 32,33: Profilelement
- 34: Verbindungsabschnitt
- 35: Konstruktionsprofil
- 36: Profilelement
- 37: Hohlprofilelement
- 38: Aufnahmenut
- 39: Fremdelement
- 40: Dekoelement
- 41: Verbindungsmittel
- 42: Nutflanke
- 43: Widerhakenelement
- 44: Montageelement
- 45: Verblendung
- 46: Kragenabschnitt
- 47: Öffnung
- 48: Anlagefläche
- 49: Stegabschnitt
- 50: Vertiefung
- 51: Öffnung
- 52: Lasche

## Patentansprüche

1. Set aus Konstruktionsprofil (2,3,35) und Montageelement (14,44) zur Bildung einer Rahmenkonstruktion (1), insbesondere eines Podests, einer Bühne und/oder einer Tribüne, wobei das Konstruktionsprofil (2,3,35) zwei Profilelemente (9,10,32,33,36) und einen die Profilelemente (9,10,32,33,36) verbindenden Verbindungsabschnitt (15,34) aufweist, wobei die Profilelemente (9,10,32,33,36) an einander gegenüberliegenden Seiten des Verbindungsabschnitts (15,34) angeordnet sind, wobei der Verbindungsabschnitt (15,34) einen Nutgrund (17) und die Profilelemente (9,10,32,33,36) einander gegenüberliegende Nutflanken (18) wenigstens einer sich längs des Konstruktionsprofils (2,3,35) erstreckenden Montagenut (7) bilden, wobei die Öffnung (16) der Montagenut (7) zwischen den Profilelementen angeordnet ist, wobei die Montagenut (7) gesehen von der Öffnung (16) den Profilelementen (9,10,32,33,36) zugeordnet jeweils wenigstens eine sich längs des Konstruktionsprofils (2,3,35) erstreckende Hinterschneidung (22) zum Eingreifen eines Halteabschnitts (24) eines in die Montagenut (7) eingesetzten Montageelements (14,44) aufweist, wobei das wenigstens eine wenigstens teilweise in einer Montagenut (7) aufgenommene Montageelement (14,44) die wenigstens eine Hinterschneidung (22) hintergreift, **dadurch gekennzeichnet, dass**
die Flanken (18) der wenigstens einen Montagenut (7) zwei einander gegenüberliegende, aufeinander zu gewandte, ebene und parallele Montageflächen (19) zur kraftschlüssigen Anlage des wenigstens teilweise in der Montagenut (7) aufgenommenen Montageelements (14,44) aufweisen, wobei die Hinterschneidungen (22) der wenigstens einen Montagenut (7) von zwei zwischen dem Nutgrund (17) und den Montageflächen (19) vorgesehenen Haltenuten (21) gebildet werden, wobei die Montageflächen (19) der Montagenut (7) zwischen den Hinterschneidungen (22) und der Öffnung (16) angeordnet sind und wobei die Hinterschneidungen (22) jeweils eine von der Öffnung (16) der Montagenut (7) weg geneigte Haltefläche (23) zum Halten des Montageelements (14,44) aufweisen, wobei wenigstens ein Profilelement (9,10,32,33,36) angrenzend zum Verbindungsabschnitt (15) wenigstens ein Hohlprofilelement (37) mit einem wenigstens im Wesentlichen geschlossenen Querschnitt umfasst.

2. Set nach Anspruch 1,
**dadurch gekennzeichnet dass,**
der Verbindungsabschnitt (15) die Nutgründe (17) und die Profilelemente (9,10,32,33,36) einander gegenüberliegende Nutflanken (18) von zwei sich längs des Konstruktionsprofils (2,3,35) erstreckenden Montagenuten (7) bilden und dass die zwischen den Profilelementen (9,10,32,33,36) angeordneten Öffnungen (16) der Montagenuten (7) zu gegenüberliegenden Seiten des Konstruktionsprofils (2,3,35) weisen und dass, vorzugsweise, die beiden Montagenuten (7) wenigstens im Wesentlichen gleichförmig, vorzugsweise wenigstens im Wesentlichen symmetrisch zueinander, insbesondere in Bezug zu einer sich in Längsrichtung des Konstruktionsprofils (2,3,35) erstreckenden und durch den Verbindungsabschnitt (15) definierten Symmetrieebene, ausgebildet sind.

3. Set nach Anspruch 2,
**dadurch gekennzeichnet dass,**
jede der Montagenuten (7) gesehen von der jeweiligen Öffnung (16) den Profilelementen (9,10,32,33,36) zugeordnet jeweils wenigstens eine sich längs des Konstruktionsprofils (2,3,35) erstreckende Hinterschneidung (22) zum Eingreifen eines Halteabschnitts (24) eines in die Montagenut (7) eingesetzten Montageelements (14,44) aufweisen.

4. Set nach einem der Ansprüche 1 bis 3,
**dadurch gekennzeichnet dass,**
die wenigstens eine Montagenut (7) wenigstens im Wesentlichen symmetrisch zu einer sich in Längsrichtung des Konstruktionsprofils (2,3,35) und durch die Öffnung (16) der wenigstens einen Montagenut (7) erstreckenden, vorzugsweise den Verbindungsabschnitt (15) schneidenden, Ebene ausgebildet ist und/oder dass das Konstruktionsprofil (2,3,35) als metallenes Strangpressprofil ausgebildet ist.

5. Set nach Anspruch 1 bis 4,
**dadurch gekennzeichnet dass,**
das Montageelement (14,44) zwei wenigstens im Wesentlichen ebene Montageflächen (20) zur kraftschlüssigen Anlage an den Montageflächen (19) der Montagenut (7) aufweist und dass, vorzugsweise, das Montageelement (14,44) im Uhrzeigersinn oder im Gegenuhrzeigersinn angrenzend zu den Montageflächen (20) Abrundungen (28) zum Eindrehen des Montageelements (14,44) in die Montagenut (7) aufweist.

6. Set nach Anspruch 5,
**dadurch gekennzeichnet dass,**
das Montageelement (14,4) angrenzend zu wenigstens einer Montagefläche (20) wenigstens eine, vorzugsweise schlitzförmige, insbesondere parallel zur Montagefläche (20) verlaufende, Aussparung (31) aufweist und dass, vorzugsweise, der wenigstens eine Montageabschnitt zwischen der wenigstens einen Montagefläche (20) und der wenigstens einen Aussparung (31) unter Ausbildung einer Rückstellkraft gegen die Montagefläche (19) der Montagenut (7) elastisch verformt ist.

7. Set nach einem der Ansprüche 1 bis 6,
**dadurch gekennzeichnet dass,**
das Montageelement (14,44) seitlich abstehende und die Hinterschneidungen (22) hintergreifende, vorzugsweise in die Haltenuten (21) eingereifende, Halteabschnitte (24) aufweist und/oder dass das Montageelement (44) ein von der dem Verbindungsabschnitt (15) abgewandten Seite zugänglichen Innensechskant zum Eindrehen des Montageelements (44) in die Montagenut (7) aufweist.

8. Set nach einem der Ansprüche 1 bis 7,
**dadurch gekennzeichnet dass,**
das Montageelement (14) ein Innengewinde (26), vorzugsweise eine Hülse (25) mit einem Innengewinde (26), zum Einschrauben eines Außengewindes von der Seite des Konstruktionselements (2,3,35) aufweist und/oder dass das Montageelement (14,44) aus einem Kunststoff und, vorzugsweise, die Hülse (25) aus einem Metall gebildet ist.

9. Set nach einem der Ansprüche 1 bis 8,
**dadurch gekennzeichnet dass,**
das Montageelement (14,44) an der dem Verbindungsabschnitt (15) zugewandten Seite einen vorstehenden Stiftabschnitt (30) aufweist und dass, vorzugsweise, der Stiftabschnitt (30) in eine Aussparung, insbesondere Öffnung (8), im Verbindungsabschnitt (15) eingreift.

10. Set nach einem der Ansprüche 1 bis 9,
**dadurch gekennzeichnet dass,**
das Montageelement (2) auf der dem Verbindungsabschnitt (15) abgewandten Seite eine, insbesondere aus Holz, Metall und/oder Kunststoff gebildete Verblendung zur wenigstens teilweisen, vorzugsweise wenigstens im Wesentlichen vollständigen Verblendung des Konstruktionsprofils (2) an der dem Montageelement (44) zugewandten Seite aufweist.

11. Set nach einem der Ansprüche 1 bis 10,
**dadurch gekennzeichnet dass,** wenigstens ein Profilelement (9,10,32) eine sich in Längsrichtung des Konstruktionsprofils (2,3,35) erstreckende, vorzugsweise dem dem Verbindungsabschnitt (15) abgewandten Ende des Profilelements (9,10,32) zugeordnete, Decklagenarretierungsnut (11) zur formschlüssigen Sicherung eines Decklage (4) gegenüber einem Abheben vom Konstruktionsprofil (2,3,35) aufweist und dass, vorzugsweise, die wenigstens eine Decklagenarretierungsnut (11) durch Strangpressen des Konstruktionsprofils (2,3,35) gebildet ist.

12. Set nach Anspruch 11,
**dadurch gekennzeichnet dass,**
die wenigstens eine Decklagenarretierungsnut (11) zu derselben Seite wie wenigstens eine Montagenut (7) geöffnet ist.

13. Rahmenkonstruktion (1), insbesondere eines Podests, einer Bühne und/oder einer Tribüne, mit einer Mehrzahl, vorzugsweise vier, insbesondere in Form eines Rechtecks, umlaufend angeordneter gleichartiger, vorzugsweise an den Längsenden miteinander verschweißter, Konstruktionsprofile (2),
**dadurch gekennzeichnet dass,**
die Rahmenkonstruktion (1) wenigstens ein Set aus Konstruktionsprofil (2,3,35) und Montageelement (14,44) nach einem der Ansprüche 1 bis 12 aufweist.

14. Rahmenkonstruktion nach Anspruch 13,
**dadurch gekennzeichnet dass,**
auf den umlaufend angeordneten Konstruktionsprofilen (2) eine, vorzugsweise vollflächige Decklage (4), insbesondere aus Holz und/oder Kunststoff, aufgelegt ist und dass, vorzugsweise, die Decklage (4) wenigstens mit einigen der Konstruktionsprofilen (2), insbesondere durch Eingreifen eines Arretierungsmittels, vorzugsweise Lasche (52) in wenigstens eine Decklagenarretierungsnut (11), formschlüssig gegenüber einem Abheben der Decklage (4) von der Rahmenkonstruktion (1) gesichert ist.

## Claims

1. Set of construction profile (2, 3, 35) and mounting element (14, 44) for forming a frame construction (1), in particular a platform, a stage and/or a grandstand, wherein the construction profile (2, 3, 35) has two profile elements (9, 10, 32, 33, 36) and a connecting section (15, 34) connecting the profile elements (9, 10, 32, 33, 36), wherein the profile elements (9, 10, 32, 33, 36) are arranged on opposite sides of the connecting section (15, 34), wherein the connecting section (15, 34) has a groove base (17) and the profile elements (9, 10, 32, 33, 36) form mutually opposite groove flanks (18) of at least one mounting groove (7) extending along the structural profile (2, 3, 35), wherein the opening (16) of the mounting groove (7) is arranged between the profile elements, wherein the mounting groove (7), as seen from the opening (16), associated to the profile elements (9, 10, 32, 33, 36), has at least one undercut (22) extending along the structural profile (2, 3, 35) for engaging a retaining section (24) of a mounting element (14, 44) inserted into the mounting groove (7), wherein the at least one mounting element (14, 44), which is at least partially received in a mounting groove (7), engages behind the at least one undercut (22),
**characterized in that**
the flanks (18) of the at least one mounting groove (7) have two opposing, mutually facing, flat and parallel mounting surfaces (19) for force-fit abutment of the mounting element (14, 44) at least partially received in the mounting groove (7), wherein the undercuts (22) of the at least one mounting groove (7) are formed by two retaining grooves (21) provided between the groove base (17) and the mounting surfaces (19), wherein the mounting surfaces (19) of the mounting groove (7) are arranged between the undercuts (22) and the opening (16) and wherein the undercuts (22) respectively have a retaining surface (23) inclined away from the opening (16) of the mounting groove (7) for retaining the mounting element (14, 44),
wherein
at least one profile element (9, 10, 32, 33, 36) adjacent to the connecting portion (15) comprises at least one hollow profile element (37) with an at least substantially closed cross-section.

2. Set according to claim 1,
**characterized in that**
the connecting portion (15), the groove bases (17) and the profile elements (9, 10, 32, 33, 36) form mutually opposite groove flanks (18) of two mounting grooves (7) extending along the structural profile (2, 3, 35), and that the openings (16) of the mounting grooves (7) arranged between the profile elements (9, 10, 32, 33, 36) face opposite sides of the structural profile (2, 3, 35), and that, preferably, the two mounting grooves (7) are formed at least substantially uniformly, preferably at least substantially symmetrically to one another, in particular in relation to a plane of symmetry extending in the longitudinal direction of the structural profile (2,3,35) and defined by the connecting section (15).

3. Set according to claim 2,
**characterized in that**
each of the mounting grooves (7), as seen from the respective opening (16), respectively associated to the profile elements (9, 10, 32, 33, 36), has at least one undercut (22) extending along the construction profile (2, 3, 35) for engaging a retaining section (24) of a mounting element (14, 44) inserted into the mounting groove (7).

4. Set according to one of claims 1 to 3,
**characterized in that**
the at least one mounting groove (7) is formed at least substantially symmetrically to a plane extending in the longitudinal direction of the construction profile (2, 3, 35) and through the opening (16) of the at least one mounting groove (7), preferably intersecting the connecting section (15), and/or that the construction profile (2, 3, 35) is formed as a metal extruded profile.

5. Set according to claims 1 to 4,
**characterized in that**
the mounting element (14, 44) has two at least substantially flat mounting surfaces (20) for force-locking contact with the mounting surfaces (19) of the mounting groove (7) and that, preferably, the mounting element (14, 44) has roundings (28) adjacent to the mounting surfaces (20) in a clockwise or counterclockwise direction for screwing-in the mounting element (14, 44) into the mounting groove (7).

6. Set according to claim 5,
**characterized in that**
the mounting element (14, 4) has, adjacent to at least one mounting surface (20), at least one, preferably slot-shaped, recess (31), in particular running parallel to the mounting surface (20), and that, preferably, the at least one mounting section between the at least one mounting surface (20) and the at least one recess (31) is elastically deformed, thereby forming a restoring force against the mounting surface (19) of the mounting groove (7).

7. Set according to one of claims 1 to 6,
**characterized in that**
the mounting element (14, 44) has laterally projecting retaining sections (24) which engage behind the undercuts (22), preferably engage in the retaining grooves (21), and/or that the mounting element (44) has an internal hexagon which is accessible from the side facing away from the connecting section (15) for screwing the mounting element (44) into the mounting groove (7).

8. Set according to one of claims 1 to 7,
**characterized in that**
the mounting element (14) has an internal thread (26), preferably a sleeve (25) with an internal thread (26), for screwing-in an external thread from the side of the structural element (2, 3, 35) and/or that the mounting element (14, 44) is formed from a plastic and, preferably, the sleeve (25) is formed from a metal.

9. Set according to one of claims 1 to 8,
**characterized in that**
the mounting element (14, 44) has a projecting pin section (30) on the side facing the connecting section (15) and that, preferably, the pin section (30) engages in a recess, in particular opening (8), in the connecting section (15).

10. Set according to one of claims 1 to 9,
**characterized in that**,
the mounting element (2) has a facing on the side facing away from the connecting section (15), , in particular formed from wood, metal and/or plastic, for at least partial, preferably at least substantially complete facing of the structural profile (2) on the side facing the mounting element (44).

11. Set according to one of claims 1 to 10,
**characterized in that**
at least one profile element (9, 10, 32) has a cover layer locking groove (11) extending in the longitudinal direction of the construction profile (2, 3, 35), preferably assigned to the end of the profile element (9, 10, 32) facing away from the connecting section (15), for positively securing a cover layer (4) against lifting from the structural profile (2, 3, 35) and that, preferably, the at least one cover layer locking groove (11) is formed by extrusion of the structural profile (2, 3, 35).

12. Set according to claim 11,
**characterized in that**
the at least one cover layer locking groove (11) is open to the same side as at least one mounting groove (7).

13. Frame construction (1), in particular of a platform, a stage and/or a grandstand, with a plurality, preferably four, in particular in the form of a rectangle, circumferentially arranged same construction profiles (2), preferably welded together at the longitudinal ends,
**characterized in that**
the frame construction (1) has at least one set of construction profile (2, 3, 35) and mounting element (14, 44) according to one of claims 1 to 12.

14. Frame construction according to claim 13,
**characterized in that**
a, preferably full-surface, cover layer (4), in particular of wood and/or plastic, is placed on the circumferentially arranged construction profiles (2) and that, preferably, the cover layer (4) is positively secured to at least some of the construction profiles (2), in particular by engagement of a locking means, preferably tab (52) in at least one cover layer locking groove (11), against lifting of the cover layer (4) from the frame construction (1).

## Revendications

1. Ensemble d'un profilé de construction (2, 3, 35) et d'un élément de montage (14, 44) pour former une construction de cadre (1), en particulier une estrade, une scène et/ou une tribune, où le profilé de construction (2, 3, 35) a deux éléments profilés (9, 10, 32, 33, 36) et une partie de liaison reliant les éléments profilés (9, 10,32, 33, 36), où les éléments profilés (9, 10, 32, 33, 36) sont disposés sur des côtés opposés de la section de liaison (15, 34), où la section de liaison (15, 34) a un fond de rainure (17) et les éléments profilés (9, 10,32, 33, 36) forment des flancs de rainure (18) opposés les uns aux autres d'au moins une rainure de montage (7) s'étendant le long du profilé de construction (2, 3, 35), où l'ouverture (16) de la rainure de montage (7) est disposée entre les éléments profilés, où la rainure de montage (7), vue depuis l'ouverture (16), est attribuée aux éléments profilés (9,10, 32, 33, 36) a respectivement au moins une contre-dépouille (22) s'étendant le long du profilé de construction (2, 3, 35) pour engagement d'une section de retenue (24) d'un élément de montage (14, 44) inséré dans la rainure de montage (7), où l'au moins un élément de montage (14, 44) logé au moins partiellement dans une rainure de montage (7) s'engage derrière l'au moins une contre-dépouille (22),
**caractérisé en ce que**
les flancs (18) de l'au moins une rainure de montage (7) ont deux surfaces de montage opposées, tournées l'une vers l'autre, planes et parallèles pour une application par liaison de force de l'élément de montage (14, 44) reçu au moins partiellement dans la rainure de montage (7), où les contre-dépouilles (22) de la au moins une rainure de montage (7) est formées par deux rainures de retenue (21) prévues entre le fond de rainure (17) et les surfaces de montage (19), où les surfaces de montage (19) de la rainure de montage (7) sont disposées entre les contre-dépouilles (22) et l'ouverture (16) et les contre-dépouilles (22) ont respectivement une surface de retenue (23) inclinée à l'opposé de l'ouverture (16) de la rainure de montage (7) pour retenir l'élément de montage (14, 44),
où
au moins un élément profilé (9, 10, 32, 33, 36) comprend, de manière adjacente à la section de liaison (15), au moins un élément profilé creux (37) avec une section transversale au moins essentiellement fermée.

2. Ensemble selon la revendication 1,
**caractérisé en ce que**
la section de liaison (15) forme les fonds de rainure (17) et les éléments de profilé (9, 10, 32, 33, 36) forment des flancs de rainure (18) opposés l'un à l'autre de deux rainures de montage (7) s'étendant le long du profilé de construction (2, 3, 35) et que les ouvertures (16) des rainures de montage (7) disposées entre les éléments de profilé (9, 10, 32, 33, 36) sont orientées vers des côtés opposés du profilé de construction (2, 3, 35) et que, de préférence, les deux rainures de montage (7) sont formées au moins essentiellement de manière uniforme, de préférence au moins essentiellement symétriques l'une par rapport à l'autre, en particulier par rapport à un plan de symétrie s'étendant dans la direction longitudinale du profilé de construction (2, 3, 35) et défini par la section de liaison (15).

3. Ensemble selon la revendication 2,
**caractérisé en ce que**
chacune des rainures de montage (7), vue depuis l'ouverture respective (16), ont, associées aux éléments profilés (9, 10, 32, 33, 36), respectivement au moins une contre-dépouille (22) s'étendant le long du profilé de construction (2, 3, 35) pour l'engagement d'une section de retenue (24) d'un élément de montage (14, 44) inséré dans la rainure de montage (7).

4. Ensemble selon l'une des revendications 1 à 3,
**caractérisé en ce que**
la au moins une rainure de montage (7) est formée au moins essentiellement symétriquement par rapport à un plan s'étendant dans la direction longitudinale du profilé de construction (2, 3, 35) et à travers l'ouverture (16) de la au moins une rainure de montage (7), de préférence coupant la section de liaison (15), et/ou que le profilé de construction (2, 3, 35) est formé sous forme de profilé extrudé métallique.

5. Ensemble selon les revendications 1 à 4,
**caractérisé en ce que**
l'élément de montage (14, 44) a deux surfaces de montage (20) au moins essentiellement planes pour un appui par liaison de force sur les surfaces de montage (19) de la rainure de montage (7) et que, de préférence, l'élément de montage (14, 44) a, dans le sens des aiguilles d'une montre ou dans le sens contraire des aiguilles d'une montre, des arrondis (28) adjacents aux surfaces de montage (20) pour un vissage de l'élément de montage (14, 44) dans la rainure de montage (7).

6. Ensemble selon la revendication 5,
**caractérisé en ce que**
l'élément de montage (14, 4) a, de manière adjacente à au moins une surface de montage (20), au moins un évidement (31), de préférence en forme de fente, en particulier parallèle à la surface de montage (20), et que, de préférence, l'au moins une section de montage entre l'au moins une surface de montage (20) et l'au moins un évidement (31) est déformée élastiquement en formant une force de rappel contre la surface de montage (19) de la rainure de montage (7).

7. Ensemble selon l'une des revendications 1 à 6,
**caractérisé en ce que**
l'élément de montage (14, 44) a des sections de retenue (24) faisant saillie latéralement et s'engageant derrière les contre-dépouilles (22), de préférence en s'enclenchant dans les rainures de retenue (21), et/ou que l'élément de montage (44) a un hexagone interne accessible depuis le côté opposé à la section de liaison (15) pour visser l'élément de montage (44) dans la rainure de montage (7).

8. Ensemble selon l'une des revendications 1 à 7,
**caractérisé en ce que**
l'élément de montage (14) comprend un filetage interne (26), de préférence une douille (25) avec un filetage interne (26), pour visser un filetage externe depuis le côté de l'élément de construction (2, 3, 35) et/ou que l'élément de montage (14, 44) est formé d'une matière plastique et, de préférence, la douille (25) est formée d'un métal.

9. Ensemble selon l'une des revendications 1 à 8,
**caractérisé en ce que**
l'élément de montage (14, 44) a, sur le côté tourné vers la section de liaison (15), une section de tige (30) en saillie et que, de préférence, la section de tige (30) s'engage dans un évidement, en particulier une ouverture (8), dans la section de liaison (15).

10. Ensemble selon l'une des revendications 1 à 9,
**caractérisé en ce que**
l'élément de montage (2) a, sur le côté opposé à la section de liaison (15), un diaphragme, en particulier formé de bois, de métal et/ou de matière plastique, pour un habillage au moins partiel, de préférence au moins essentiellement complet, du profilé de construction (2) sur le côté tourné vers l'élément de montage (44).

11. Ensemble selon l'une des revendications 1 à 10,
**caractérisé en ce que**
au moins un élément de profilé (9, 10, 32) a une rainure de blocage de couche de recouvrement (11) s'étendant dans la direction longitudinale du profilé de construction (2, 3, 35), de préférence associée à l'extrémité de l'élément de profilé (9, 10, 32) opposée à la section de liaison (15), pour assurer par liaison de forme d'une couche de recouvrement (4) contre uni soulèvement du profil de construction (2, 3, 35) et que, de préférence, l'au moins une rainure de blocage de couche de recouvrement (11) est formée par extrusion du profilé de construction (2, 3, 35).

12. Ensemble selon la revendication 11,
**caractérisé en ce que**
l'au moins une rainure de blocage de couche de couverture (11) est ouverte du même côté qu'au moins une rainure de montage (7).

13. Construction de cadre (1), en particulier d'une estrade, d'une scène et/ou d'une tribune, avec une pluralité, de préférence quatre, en particulier en forme de rectangle, de profilés de construction (2) de même type disposés sur le pourtour, de préférence soudés les uns aux autres aux extrémités longitudinales,
**caractérisée en ce que**
la construction de cadre (1) a au moins un jeu de profilé de construction (2, 3, 35) et d'élément de montage (14, 44) selon l'une des revendications 1 à 12.

14. Construction de cadre selon la revendication 13,
**caractérisée en ce que**
une couche de recouvrement (4), de préférence sur toute la surface, en particulier bartosz.gladysz@heroal.deen bois et/ou en matière plastique, est posée sur les profilés de construction (2) disposés sur le pourtour, et que, de préférence, la couche de recouvrement (4) est bloquée par liaison de forme avec au moins quelques des profilés de construction (2), en particulier par engagement d'un moyen d'arrêt, de préférence une patte (52) dans au moins une rainure de blocage de couche de recouvrement (11), contre un soulèvement de la couche de recouvrement (4) de la construction de cadre (1).
